# EUROPEAN PATENT SPECIFICATION

(11) **EP 3 749 933 B1**
(45) Date of publication and mention of the grant of the patent: **29.03.2023**
(21) Application number: 19841791.7
(22) Date of filing: 06.02.2019
(51) Int. Cl.: G01F 23/263, A47J 31/52, G01F 25/20

(54) **AN APPARATUS FOR SENSING LIQUID LEVEL, A DEVICE USING THE SAID APPARATUS, AND A CALIBRATION METHOD**
GERÄT ZUR MESSUNG DES FLÜSSIGKEITSPEGELS, VORRICHTUNG MIT DIESEM GERÄT UND KALIBRIERUNGSVERFAHREN
APPAREIL DE DÉTECTION DE NIVEAU DE LIQUIDE, DISPOSITIF UTILISANT LEDIT APPAREIL ET PROCÉDÉ D'ÉTALONNAGE

(30) Priority: 08.02.2018 TR 201801786
(43) Date of publication of application: 16.12.2020
(73) Proprietor: Arzum Elektrikli Ev Aletleri San. Ve Tic. A.S., 34050 Istanbul (TR)
(72) Inventor: ATILLA, Ersoy, 34050 Eyüp/Istanbul (TR); YILDIZ, Mehtap, 34050 Eyüp/Istanbul (TR)
(86) International application number: PCT/TR2019/050070
(87) International publication number: WO 2020/022982

(56) References cited:
- WO-A1-2016/057131
- CN-U- 205 192 568
- US-A1- 2008 053 211
- US-A1- 2011 265 562
- US-A1- 2011 314 907
- US-A1- 2013 261 539

## Description

### Field of the Invention

The present invention relates to an apparatus for sensing liquid level in a container especially in devices having a liquid container, a device where said apparatus is used, and a calibration method for calibrating the measurement of the liquid level.

### Background of the Invention

Household appliances such as hot beverage brewing machines, vacuum cleaners and irons might comprise water containers. The water in these containers could be used for various objectives. For example, in a coffee machine, this water is used for brewing coffee, while in an iron, it is used for generating steam, and in a vacuum cleaner it is used for confining dust. Whatever the objective might be, when the water level in the said machine is below a certain level, it might cause the said machine to malfunction. It is therefore important to monitor the water level.

Especially in applications such as hot beverage brewing machines, it is important to detect the liquid level on multiple levels for giving the user a more sensitive feedback. However, in the state of the art, the liquid level is sensed only at a critical level at the bottom.

The international patent document numbered WO2006056257 in the background of the invention discloses a sensor which enables sensing liquid level in a contactless manner. The said sensor is placed at an angle with respect to the base of the container, and performs liquid level measurements. In the said document, the water container needs to be produced such that it allows the sensor to be placed at an angle with the base.

The United States patent document numbered US8469050 in the background of the invention discloses a structure which enables the liquid level to be sensed capacitively. In the said structure, the liquid level is sensed by conductive plate couples, using the change in the capacitance between these plates. In the said document, two plates need to be used for each level to be sensed.

The United States patent document numbered US2011314907 deals with the external interference problems in capacitive sensor arrays. The said interference problem is solved by a particular arrangement of at least two measurement electrodes and one reference electrode. Each measurement electrode forms a capacitor together with the reference electrode. In the said document, two plates need to be used for each level to be sensed.

The United States patent document numbered US2017059386 relates to a measuring device that measures the level of fluid in a tank. The measuring means include at least one sensor including a capacitive element electrically coupled to an oscillator configured to deliver a signal whose frequency is a function of the capacitance of the capacitive element; at least one sensor being intended to be disposed outside of the tank, so that the capacitance of the capacitive element varies based on the level of the fluid, when the level is comprised between a first threshold and a second threshold; a processing module, coupled to at least one sensor, and configured to determine the level n of fluid in the tank based on the frequency of the signal. In the said document, calibration is done by reading the sensor output once when the tank is full and once when the tank is empty.

The German patent document numbered DE102010062315 discloses a for storing fluid and detecting the level of the liquid being stored. The device has a measuring unit for detecting liquid level of fluid in an area of a measuring channel, and a storage container hydraulically connected with the channel over a connection point.

The measuring unit is arranged at an outer side of the channel. The channel has a measuring channel wall that limits the channel, where the connection point is arranged between the container and the channel. The measuring unit comprises magnetic switches, and the channel comprises a magnetic float. When the fluid level in the channel changes, so does the position of the float and, consequently, the magnetic switch affected by the float.

Additionally, the present solutions in the state of the art are not suitable to be used with containers produced of different materials and/or at different thicknesses. As different containers cause different changes in the capacitance, a measurement from one container could be different from another container.

An apparatus which does not need the water container to be produced in a special shape, and which could sense at multiple levels, and which is suitable for being used with different containers is not known in the state of the art.

None of the documents in the state of the art disclose a solution as in the present application.

### Short Description of the Invention

The object of the present invention is to provide an apparatus, as defined in claim 1, for sensing liquid level in a container in devices having a liquid container.

Another object of the present invention is to provide a calibration method, as defined in claim 11, for accurately sensing the liquid level in the container.

### Detailed Description of the Invention

The electrical device in order to fulfill the objects of the present invention is illustrated in the attached figures, where:

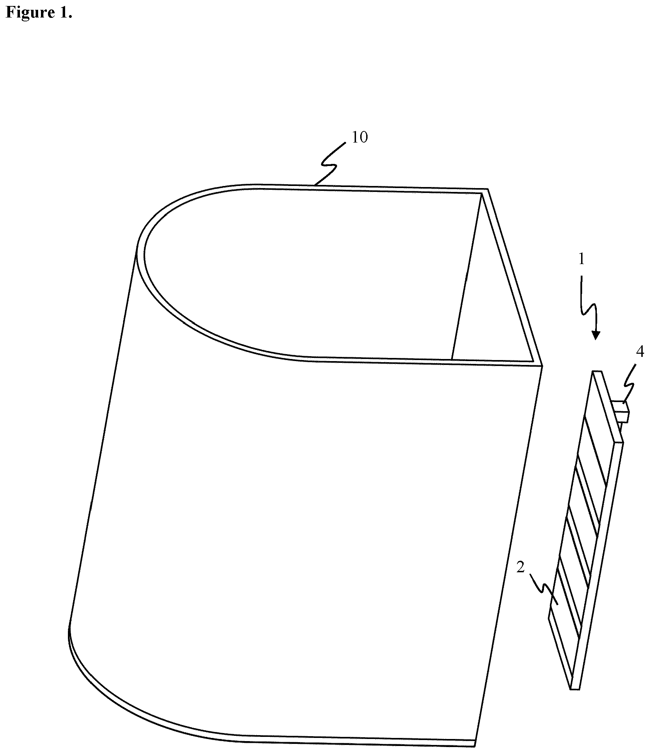

- **Figure 1.**: Is a view of the apparatus and the container

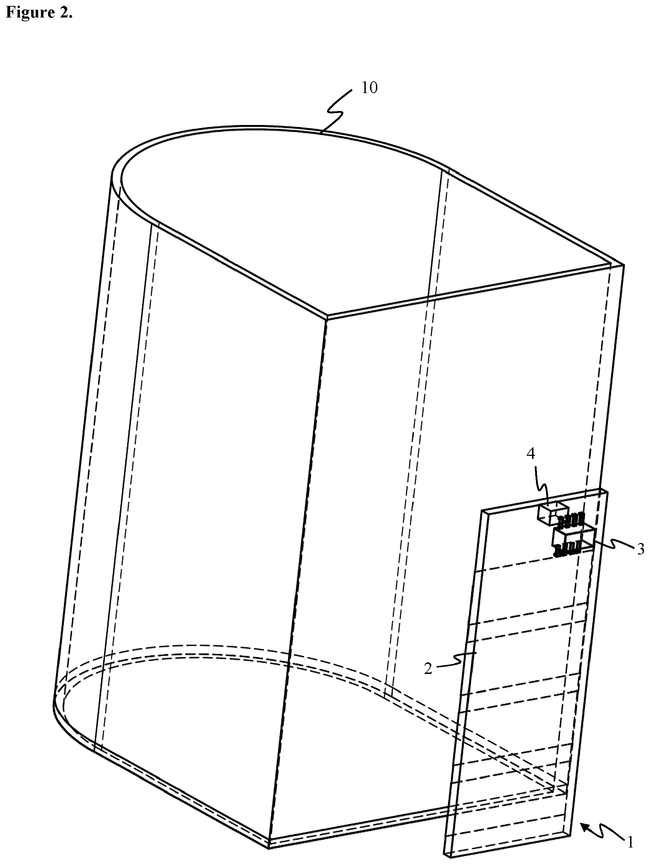

- **Figure 2.**: Is another view of the apparatus and the container

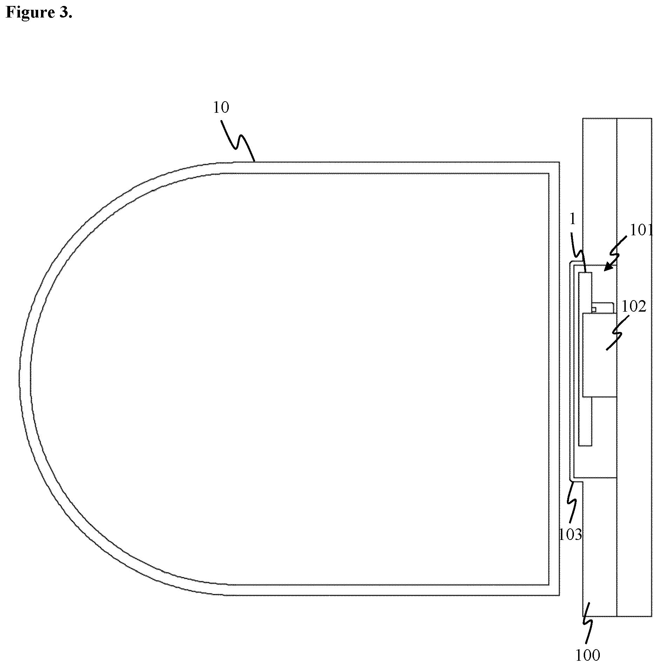

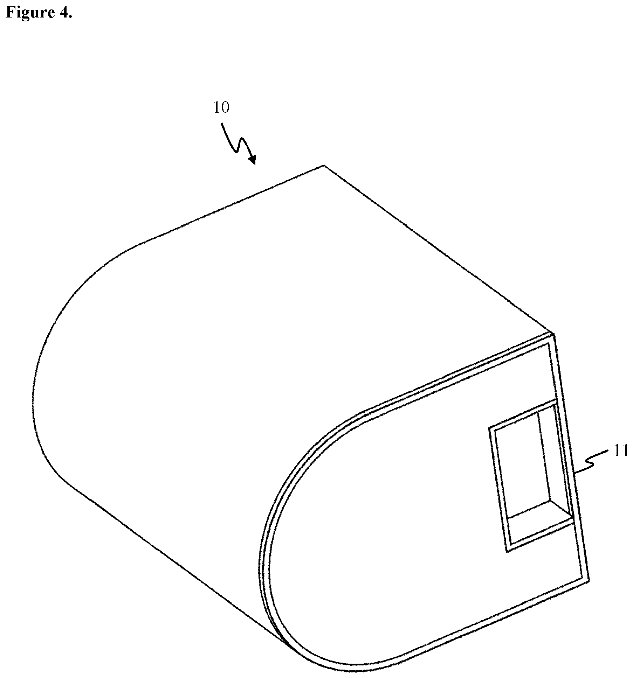

- **Figure 3.**: Is the view of a placement of the apparatus, device, and the container

Elements shown in the figures are individually numbered, and the correspondence of these numbers are given as follows:
- **1.**: Apparatus
- **2.**: Plate
- **3.**: Control unit
- **4.**: Connector

- **100.**: Device
- **101.**: Pocket
- **102.**: Latch
- **103.**: Protrusion

- **10.**: Container
- **11.**: Calibration part

An apparatus (1) for detecting the liquid level in a container (10) in a contactless manner comprises at least one plate (2) for each level to be sensed on a container (10), at least one control unit (3) adapted to send electrical signals to the said at least one plate (2) and calculate the change in the capacitance of the said at least one plate (2) according to the changes in the said electrical signals. The apparatus further comprises at least another plate (2) which is placed so that it corresponds to a calibration part (11) of the container (10) which has air in both sides even when the container (10) is filled with water. The control unit (3) is adapted to calibrate according to the data it receives from the said another plate (2) corresponding to the calibration part (11).

In the preferred embodiment of the invention, the inventive apparatus (1) comprises at least three plates (2) for detecting liquid level in a container at multiple levels, where the apparatus comprises at least one plate (2) for each level to be sensed. The said plates (2) are placed consecutively in the direction of the rising liquid in the case when liquid is poured into the container (10). The plates (2) might be contiguous to each other, or they might have a space in between as well.

The closer the plates (2) are located to the container (10), the more accurate the liquid level in the container (10) is sensed. However, the plates (2) do not need to touch the container (10) in order to sense the level of the liquid inside the container (10). In other words, the plates (2) could be located at a distance to the container (10) such that the change in the level of the liquid inside the container (10) causes a change in the capacitance of the plates. By this way, the plates (2) become independent from the container (10) used.

In an embodiment of the invention, the plates (2) are placed on a plain circuit board (PCB). By this way, the inventive apparatus (1) is easier to be produced, and to be placed.

In another embodiment of the invention, the plates (2) are independent from each other. In this embodiment, the plates (2) might be placed on different planes than each other. By this, the inventive apparatus (1) might easily be adapted to be used for sensing the liquid level in containers (10) having different shapes.

In an embodiment of the invention, the inventive apparatus (1) comprises at least one connector (4) for enabling electrical connections such as for providing the power needed for the control unit (3) to work, and for transmitting electrical signals such as communication signals for the control unit (3) to communicate with external components.

In an embodiment of the invention, the control unit (3) sends a signal to the plates (2) which has predetermined amplitude, time and frequency. The said signal might be a square wave. The parameters of the signal generated by the control unit (3) changes according to the capacitance of the plate (2) to which this signal is sent.

The control unit (3) could detect the change in the capacitance of the plate (2) by comparing the sent and returned signals. When the level corresponding to each plate (2) in the container (10) is empty, partially full, or full, the related plate (2) has different capacitances. The control unit (3) senses the level of the liquid inside the container (10) by detecting the said capacitances, or parameters related to the said capacitances of the plates (2).

According to the invention, the container (10) comprises at least one calibration part (11) which has air in its both sides even when the container (10) is filled with water. The said calibration part (11) is preferably made of the same material with the rest of the container (10). The thickness of the said calibration part (11), and, when the container (10) is placed (100) on the device (100), the thickness of the parts corresponding to the plates (2) are preferably the same. As the thicknesses of the parts corresponding to each plate (2) are the same, the said thicknesses have the same impact on the measurements. By this way, the thickness of the container (10) does not deviate the results of measurement.

According to the invention, the inventive apparatus (1) is able to calibrate itself. In this embodiment, at least one of the plates (2) is placed so that it corresponds to the calibration part (11) of the container (10) which has the same thickness with the parts of the container (10) corresponding to the other plates (2), and which has air in both sides. By this way, it is ensured that the level measurements are made correctly, even when containers (10) made of different materials are used. The said calibration part (11) can be any part of the container (10) where water does not enter in, or it can be a pouch on the container (10). What is important is that the capacitance value of the plate (2), or a parameter related to the said capacitance corresponding to the calibration part (11) can be used as a reference value. In order to enable that, the calibration part (11) could be a part which has the same thickness as the container (10), and where water is prevented from entering in the said part such that it can affect the capacitance of the corresponding plate (2). By this way, the control unit (3) could determine what values it should read from the plates (2) when the container (10) is empty. Therefore, a reference value that can be used when detecting the liquid level is obtained. In other words, the control unit (3) enables calibration of the apparatus (1). By comparing this reference value with the data it receives from the other plates (2), the control unit (3) determines which levels of the container (10) corresponding to which plates (2) has water. By this obtained reference value, the deviations of measurement caused by the wearing off of the container (10), using containers (10) made of different materials, and other reasons, are compensated for. The above-mentioned parameter could be any parameter such as the resonance frequency of an RC circuit formed using the said plate (2), the frequency of the oscillator formed using the said RC circuit, the charging and/or discharging times of the said RC circuit etc.

A device (100) in which the inventive apparatus (1) is used, essentially comprises at least one pocket (101) in which the said apparatus (1) could be put, and at least one latch (102) which prevents the apparatus (1) from being removed from the pocket (101). The pocket (101) and the latch (102), together, keep the apparatus (1) at a fixed location with respect to the container (10). By this way, the measurements are always taken under same circumstances.

The pocket (101) and the latch (102) might be located on different parts of the inventive device (100). When these said parts are put together, the apparatus (1) stays inside the pocket (101) in a fixed manner.

In an embodiment of the invention, the inventive device (100) comprises a protrusion (103) for enabling the apparatus (1) to be positioned closer to the container (10). The closer positioning of the apparatus (1) to the container (10) enables the liquid level measurements to be made more sensitively.

The calibration of the liquid level measurement in the inventive apparatus (1) is done by a calibration method, executed by the control unit (3) comprising the steps of;
- receiving the capacitance value data, or a related parameter data, from the plate (2) corresponding to the calibration part (11) of the container (10),
- assigning the said received value as a reference value for the value should be received from the empty parts of the container (10),
- comparing the said reference value with the data received from the other plates (2), and determining if the parts corresponding to the said plates (2) are empty, partially full, or full

The said calibration method ensures that the level measurements are made consistently, even when containers (10) made of different materials, or containers (10) having different thicknesses are used.

## Claims

1. An apparatus (1) for detecting the liquid level in a container (10) in a contactless manner **comprising** at least one plate (2) for each level to be sensed on a container (10), at least one control unit (3) adapted to send electrical signals to the said at least one plate (2) and calculate the change in the capacitance of the said at least one plate (2) according to the changes in the said electrical signals **characterized in that the apparatus further comprises** at least another plate (2) which is placed so that it corresponds to a calibration part (11) of the container (10) which has air in both sides even when the container (10) is filled with water, and **in that** the control unit (3) is adapted to calibrate according to the data it receives from the said another plate (2) corresponding to the calibration part (11).

2. An apparatus (1) as in Claim 1, for detecting liquid level in a container (10) at multiple levels, comprising at least three plates (2), at least one plate (2) for each level to be sensed.

3. An apparatus (1) as in Claim 2, comprising plates (2) that are placed consecutively in the direction of the rising liquid level in the case when the container (10) is filled with water.

4. An apparatus (1) according to any of the above claims wherein the plates (2) are located at a distance to the container (10) such that the change in the level of the liquid inside the container (10) causes a change in the capacitance of the plates (2).

5. An apparatus (1) as in Claim 2, comprising plates (2) which are placed on a plain circuit board.

6. An apparatus (1) as in Claim 2, comprising plates (2) which are independent from each other.

7. An apparatus (1) as in Claim 6, comprising plates (2) which are placed on different planes than each other.

8. An apparatus (1) as in Claim 1, comprising at least one connector (4) for making electrical connections for transmitting electrical signals.

9. An apparatus (1) according to Claim 1, comprising a control unit (3) adapted to send to the plates (2) a signal having predetermined amplitude, time and frequency, determine the change in the capacitance of the plates (2) by comparing the sent and received signals, and detect the liquid level (10) inside the container (10) by checking the capacitance values.

10. A container (10) for being used with an apparatus according to the any one of the claims 1 to 9, comprising at least one calibration part (11) which has air in its both sides even when the container (10) is filled with water.

11. A calibration method for an apparatus (1) according to the any of the claims 1 to 9, executed by the control unit (3), comprising the steps of
- receiving the capacitance value data, or a related parameter data, from the plate (2) corresponding to the calibration part (11) of the container (10),
- assigning the said received value as a reference value for the value that should be received from the empty parts of the container (10),
- comparing the said reference value with the data received from the other plates (2), and determining if the parts of the container (10) corresponding to the said plates (2) are empty, partially full, or full.

## Patentansprüche

1. Vorrichtung (1) zum berührungslosen Erfassen des Flüssigkeitsstandes in einem Behälter (10), umfassend mindestens eine Platte (2) für jeden zu erfassenden Füllstand an einem Behälter (10), mindestens eine Steuereinheit (3) angepasst, um elektrische Signale an die mindestens eine Platte (2) zu senden und die Änderung in der Kapazität der mindestens einen Platte (2) gemäß den Änderungen in den elektrischen Signalen zu berechnen, **dadurch gekennzeichnet, dass** die Vorrichtung ferner Folgendes umfasst: mindestens eine weitere Platte (2), die so platziert ist, dass sie einem Kalibrierungsteil (11) des Behälters (10) entspricht, der Luft auf beiden Seiten hat, selbst wenn der Behälter (10) mit Wasser gefüllt ist, und dass die Steuereinheit (3) angepasst ist, gemäß den Daten zu kalibrieren, die es von der anderen Platte (2) empfängt, die dem Kalibrierteil (11) entspricht.

2. Vorrichtung (1) nach Anspruch 1 zum Erfassen eines Flüssigkeitspegels in einem Behälter (10) auf mehreren Ebenen, umfassend mindestens drei Platten (2), mindestens eine Platte (2) für jeden zu erfassenden Pegel.

3. Vorrichtung (1) nach Anspruch 2, mit Platten (2), die in Richtung des steigenden Flüssigkeitsspiegels hintereinander angeordnet sind, wenn der Behälter (10) mit Wasser gefüllt ist.

4. Vorrichtung (1) nach einem der vorstehenden Ansprüche, wobei die Platten (2) in einem solchen Abstand zu dem Behälter (10) angeordnet sind, dass die Änderung des Niveaus der Flüssigkeit innerhalb des Behälters (10) eine Änderung bewirkt in der Kapazität der Platten (2).

5. Vorrichtung (1) nach Anspruch 2, umfassend Platten (2), die auf einer einfachen Leiterplatte angeordnet sind.

6. Vorrichtung (1) nach Anspruch 2, umfassend Platten (2), die unabhängig voneinander sind.

7. Vorrichtung (1) nach Anspruch 6, umfassend Platten (2), die auf unterschiedlichen Ebenen angeordnet sind.

8. Vorrichtung (1) nach Anspruch 1, umfassend mindestens einen Verbinder (4) zum Herstellen elektrischer Verbindungen zum Übertragen elektrischer Signale.

9. Vorrichtung (1) nach Anspruch 1, die eine Steuereinheit (3) umfasst, die dafür ausgelegt ist, an die Platten (2) ein Signal mit vorbestimmter Amplitude, Zeit und Frequenz zu senden, die Änderung der Kapazität der Platten (2) zu bestimmen. durch Vergleichen der gesendeten und empfangenen Signale und Erfassen des Flüssigkeitspegels (10) innerhalb des Behälters (10) durch Überprüfen der Kapazitätswerte.

10. Behälter (10) zur Verwendung mit einer Vorrichtung nach einem der Ansprüche 1 bis 9, mit mindestens einem Kalibrierungsteil (11), das Luft an seinen beiden Seiten hat, selbst wenn der Behälter (10) gefüllt ist mit Wasser.

11. Kalibrierungsverfahren für eine Vorrichtung (1) nach einem der Ansprüche 1 bis 9, ausgeführt durch die Steuereinheit (3), umfassend die Schritte:
- Empfangen der Kapazitätswertdaten oder verwandter Parameterdaten von der Platte (2), die dem Kalibrierteil (11) des Behälters (10) entspricht,
- Zuweisen des empfangenen Werts als Referenzwert für den Wert, der von den leeren Teilen des Behälters (10) empfangen werden soll,
- Vergleichen des Referenzwerts mit den von den anderen Platten (2) empfangenen Daten und Bestimmen, ob die den Platten (2) entsprechenden Teile des Behälters (10) leer, teilweise voll oder voll sind.

## Revendications

1. Appareil (1) pour détecter le niveau de liquide dans un récipient (10) de manière sans contact comprenant au moins une plaque (2) pour chaque niveau à détecter sur un récipient (10), au moins une unité de commande (3) adapté pour envoyer des signaux électriques à ladite au moins une plaque (2) et calculer la variation de la capacité de ladite au moins une plaque (2) en fonction des variations desdits signaux électriques **caractérisé en ce que** l'appareil comprend en outre au moins une autre plaque (2) qui est placée de sorte qu'elle corresponde à une partie de calibrage (11) du récipient (10) qui contient de l'air des deux côtés même lorsque le récipient (10) est rempli d'eau, et **en ce que** l'unité de commande (3) est adapte à calibrer en fonction des données qu'elle reçoit de ladite autre plaque (2) correspondant à la pièce de calibration (11).

2. Appareil (1) selon la revendication 1, pour détecter le niveau de liquide dans un récipient (10) à plusieurs niveaux, comprenant au moins trois plaques (2), au moins une plaque (2) pour chaque niveau à détecter.

3. Appareil (1) selon la revendication 2, comprenant des plaques (2) qui sont placées consécutivement dans la direction de la montée du niveau de liquide dans le cas où le récipient (10) est rempli d'eau.

4. Appareil (1) selon l'une quelconque des revendications précédentes, dans lequel les plaques (2) sont situées à une distance du récipient (10) telle que le changement du niveau du liquide à l'intérieur du récipient (10) provoque un changement dans la capacité des plaques (2).

5. Appareil (1) selon la revendication 2, comprenant des plaques (2) qui sont placées sur une carte de circuit simple.

6. Appareil (1) selon la revendication 2, comprenant des plaques (2) qui sont indépendantes les unes des autres.

7. Appareil (1) selon la revendication 6, comprenant des plaques (2) qui sont placées sur des plans différents les uns des autres.

8. Appareil (1) selon la revendication 1, comprenant au moins un connecteur (4) pour établir des connexions électriques pour transmettre des signaux électriques.

9. Appareil (1) selon la revendication 1, comprenant une unité de commande (3) adaptée pour envoyer aux plaques (2) un signal ayant une amplitude, un temps et une fréquence prédéterminés, déterminer l'évolution de la capacité des plaques (2) en comparant les signaux envoyés et reçus, et détecter le niveau de liquide (10) à l'intérieur du récipient (10) en vérifiant les valeurs de capacité.

10. Récipient (10) destiné à être utilisé avec un appareil selon l'une quelconque des revendications 1 à 9, comprenant au moins une partie de calibrage (11) qui a de l'air dans ses deux côtés même lorsque le récipient (10) est rempli d'eau.

11. Procédé d'étalonnage d'un appareil (1) selon l'une quelconque des revendications 1 à 9, exécuté par l'unité de commande (3), comprenant les étapes consistant à
- recevoir les données de valeur de capacité, ou une donnée de paramètre associée, de la plaque (2) correspondant à la partie d'étalonnage (11) du conteneur (10),
- affecter ladite valeur reçue comme valeur de référence pour la valeur qui doit être reçue des parties vides du conteneur (10),
- comparer ladite valeur de référence avec les données reçues des autres plaques (2), et déterminer si les parties du conteneur (10) correspondant auxdites plaques (2) sont vides, partiellement pleines ou pleines.
